# EUROPÄISCHE PATENTANMELDUNG

(11) **EP 0 942 263 A2**
(43) Veröffentlichungstag der Anmeldung: **15.09.1999**
(21) Anmeldenummer: 99102187.4
(22) Anmeldetag: 04.02.1999
(51) Int. Cl.: G01F 1/56, G01P 13/00, G01F 23/22, G01F 1/704, G01P 5/08

(54) **Verfahren und Vorrichtung zum Feststellen des Fliessens einer Flüssigkeit, insbesondere in einem wasserführenden Leitungssystem**

(30) Priorität: 12.03.1998 DE 19810752
(71) Anmelder: ROBERT BOSCH GMBH, 70442 Stuttgart (DE)
(72) Erfinder: Hahn, Klaus-Wolfgang, 73278 Schlierbach (DE)

(57) **Zusammenfassung**

Die Erfindung betrifft ein Verfahren und eine Vorrichtung zum Feststellen des Fließens einer Flüssigkeit, insbesondere in einem wasserführenden Leitungssystem, mit mindestens einem Sensorelement, das bei einer Strömung der Flüssigkeit ein elektrisches Signal an eine Auswerteeinrichtung liefert.

Es wird vorgeschlagen, daß an zwei der Flüssigkeit ausgesetzten Sensorelementen (14, 18) bzw. (30, 32) die Polarisationsspannung gegenüber der Flüssigkeit erfaßt wird und die sich aus den Polarisationsspannungen ergebende Differenz einer Auswerteeinrichtung (24) zugeführt wird. Das hat den Vorteil, daß die Meßanordnung weder eine Konstantstromquelle noch ein reibungsbehaftetes bewegliches Teil benötigt.

## Beschreibung

### Stand der Technik

Die Erfindung geht aus von einem verfahren und einer Vorrichtung zum Feststellen des Fließens einer Flüssigkeit insbesondere in einem wasserführenden Leitungssystem nach der Gattung der Hauptansprüche. Bei einer bekannten Vorrichtung wird als Sensorelement ein von der Wasserströmung angetriebenes Turbinenrad eingesetzt, dessen Drehzahl oder Position über eine magnetische Koppelung an eine Auswerteeinrichtung übertragen wird. Bei dieser reibungsbehafteten Ausführung des Sensors ergibt sich ein Druckverlust in der Wasserströmung, der bei geringen Wassermengen und -drücken zu Fehlsignalen oder überhaupt zum Ausfall des Sensorsignales führen kann.

Ferner ist ein verfahren und eine Vorrichtung zum Feststellen des Fließens eines Fluids bekannt, bei dem die Kühlung eines des fließenden Fluids ausgesetzten Heißleiterelements ausgewertet wird (DE 196 18 442 A1). Diese Vorrichtung hat zwar keine bewegten Teile, benötigt jedoch eine Konstantstromquelle und eine Auswerteeinrichtung, die wegen der hohen Temperaturempfindlichkeit des Systems vorzugsweise auch bereits geringfügige Temperaturschwankungen des Fluids mit einbezieht.

### Vorteile der Erfindung

Das erfindungsgemäße Verfahren mit den Merkmalen des Hauptanspruchs hat den Vorteil, daß es ohne eine Konstantstromquelle und ohne bewegliche Teile auskommt, daher reibungslos und praktisch ohne Druckverlust arbeitet und auch bei geringen Flüssigkeitsmengen und -drücken sicher anspricht. Außerdem kann das Verfahren bei entsprechender elektronischer Auswertung auch zur Erkennung des Vorhandenseins oder Nichtvorhandenseins von Flüssigkeiten, von Flüssigkeitsdurchflüssen und zur Flüssigkeitsstandsmessung bzw. als Trockengehschutz eingesetzt werden. Die zur Durchführung des Verfahrens eingesetzten Sensorelemente können auch weiter entfernt voneinander angeordnet sein, so daß eine Überwachung über längere Strecken möglich ist.

Bei einer bevorzugten Vorrichtung zur Durchführung des Verfahrens besteht das eine Sensorelement aus einem edlen Metall, z.B. Kupfer, und das andere Sensorelement aus einem unedlen Metall, z.B. Zink. Eine gegenüber anderen Anordnungen verstärkte Ausbildung des Sensorsignales ergibt sich, wenn in Strömungsrichtung der Flüssigkeit gesehen das unedlere, vorzugsweise das aus Zink bestehende Sensorelement dem edleren, vorzugsweise aus Kupfer bestehenden Sensorelement nachgeschaltet ist.

Bei Verwendung der Vorrichtung in Wasserleitungssystemen mit starken Schwankungen der Wassertemperatur, z. B. in Zentralheizungsanlagen, kann die Auswerteschaltung ein temperaturempfindliches, das Sensorsignal entsprechend korrigierendes Funktionsbauteil enthalten. Zur Verstärkung des Sensorsignales können mehrere Sensoren in Reihe hintereinander geschaltet werden.

### Zeichnung

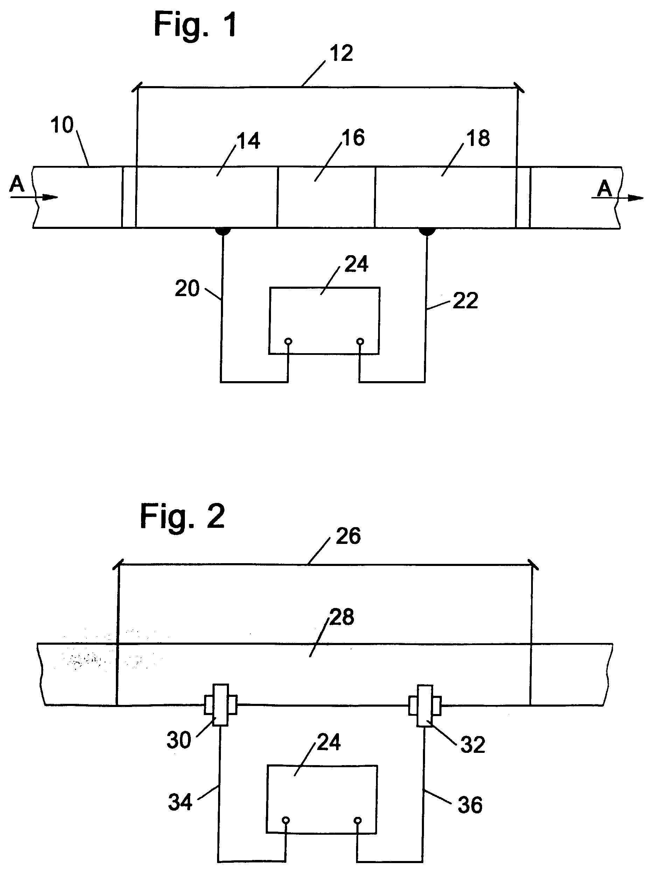

Zwei Ausführungsbeispiele sind in der Zeichnung dargestellt und in der nachfolgenden Beschreibung näher erläutert. Die Figuren 1 und 2 zeigen vereinfacht das erste und das zweite Ausführungsbeispiel.

### Beschreibung der Ausführungsbeispiele

Beim Ausführungsbeispiel nach Figur 1 ist in eine Wasserleitung 10 ein Meßabschnitt 12 isoliert eingebaut, in welchem das Wasser nacheinander ein Rohr 14 aus Kupfer, ein Rohr 16 aus elektrisch isolierendem Stoff und ein Rohr 18 aus Zink bzw. aus Zink beschichtetem Material durchströmt. An den vom Wasser benetzten Wandflächen der die beiden Sensorelemente bildenden Rohre 14 und 18 ergeben sich unterschiedliche Polarisationsspannungen gegenüber dem Wasser, die über Leitungen 20, 22 an ein Meßgerät 24 übertragen werden. Dieses zeigt die Größe der Spannungsdifferenz zwischen den beiden Polarisationsspannungen an.

Beim Ausführungsbeispiel nach Figur 2 besteht ein Meßabschnitt 26 einer Wasserleitung durchgehend aus einem Rohr 28 aus Kupfer, an welchem eine in das Rohrinnere hineinragende Elektrode 30 aus Kupfer und eine Elektrode 32 aus Zink isoliert befestigt sind. Die Elektroden 30, 32 bilden die beiden Sensorelemente, die über Leitungen 34, 36 mit dem Meßgerät 24 verbunden sind.

In einer Versuchsreihe wurden die Funktionen des Ausführungsbeispiels nach Figur 1 bei entleerter Leitung, bei ruhendem Wasser in der Leitung und bei fließendem Wasser getestet. Bei entleerter Leitung hat das Meßgerät 24 wie erwartet keine Spannungsdifferenz angezeigt. Bei ruhendem Wasser hat sich eine Spannungsdifferenzanzeige von 350 mV und bei in Richtung der Pfeile A fließendem Wasser eine entsprechende Verringerung der Spannungsdifferen ergeben. Mit diesen unterschiedlichen Anzeigewerten ist die Brauchbarkeit des Erfindungsvorschlags für die genannten Anwendungsfälle dargelegt.

Zur Vermeidung bzw. Verringerung von Korrosionserscheinungen in der Leitung kann das Verfahren getaktet betrieben werden.

## Patentansprüche

1. Verfahren zum Feststellen des Fließens einer Flüssigkeit, insbesondere in einem wasserführenden Leitungssystem, mit mindestens einem Sensorelement, das bei einer Strömung der Flüssigkeit ein elektrisches Signal an eine Auswerteeinrichtung liefert, dadurch gekennzeichnet, daß an zwei der Flüssigkeit ausgesetzten Sensorelementen (14, 18) bzw. (30, 32) die Polarisationsspannung gegenüber der Flüssigkeit erfaßt wird und die sich aus den Polarisationsspannungen ergebende Differenz einer Auswerteeinrichtung (24) zugeführt wird.

2. Vorrichtung zur Durchführung des Verfahrens nach Anspruch 1, dadurch gekennzeichnet, daß das eine Sensorelement (14, 30) aus einem edlen Metall, z.B. aus Kupfer und das andere Sensorelement (18, 32) aus einem unedlen Metall, z.B. Zink, besteht.

3. Vorrichtung nach Anspruch 2, dadurch gekennzeichnet, daß in Strömungsrichtung der Flüssigkeit gesehen das unedlere Sensorelement (18, 32) dem edleren Sensorelement (14, 30) nachgeschaltet ist.

4. Vorrichtung nach Anspruch 2 oder 3, dadurch gekennzeichnet, daß die Sensorelemente (14, 18) als Rohrabschnitte einer Wasserleitung (10) ausgebildet sind, die durch einen weiteren Rohrabschnitt (16) aus elektrisch isolierendem Stoff voneinander beabstandet sind.

5. Vorrichtung nach Anspruch 2 oder 3, dadurch gekennzeichnet, daß die Sensorelemente (30, 32) als Elektroden elektrisch isoliert in das Rohrinnere einer Wasserleitung (10) hineinragen.
